# EUROPÄISCHE PATENTSCHRIFT

(11) **EP 3 741 039 B1**
(45) Veröffentlichungstag und Bekanntmachung des Hinweises auf die Patenterteilung: **26.04.2023**
(21) Anmeldenummer: 19701582.9
(22) Anmeldetag: 10.01.2019
(51) Int. Cl.: H02M 1/32, H02M 7/5387, H02P 3/14, H02P 3/22

(54) **VERFAHREN ZUR ANSTEUERUNG, ANSTEUERSCHALTUNG, BREMSSYSTEM UND VERWENDUNG**
METHOD FOR CONTROLLING, CONTROL CIRCUIT, BRAKE SYSTEM AND USE
PROCÉDÉ DE COMMANDE, CIRCUIT DE COMMANDE, SYSTEME DE FREINAGE ET UTILISATION

(30) Priorität: 15.01.2018 DE 102018200599; 09.01.2019 DE 102019200181
(43) Veröffentlichungstag der Anmeldung: 25.11.2020
(73) Patentinhaber: Continental Automotive Technologies GmbH, 30165 Hannover (DE)
(72) Erfinder: KOHL, Andreas, 60488 Frankfurt am Main (DE); BUDIANU, Bogdan, 60488 Frankfurt am Main (DE); STRECKER, Andreas, 60488 Frankfurt am Main (DE); TURCANU, Alexandru, 60488 Frankfurt am Main (DE)
(74) Vertreter: Continental Corporation
(86) Internationale Anmeldenummer: PCT/EP2019/050569
(87) Internationale Veröffentlichungsnummer: WO 2019/138006

(56) Entgegenhaltungen:
- EP-A1- 2 433 830
- DE-A1- 10 159 639
- DE-A1-102012 216 008

## Beschreibung

Die Erfindung betrifft ein Verfahren zur Ansteuerung nach dem Oberbegriff von Anspruch 1, eine Ansteuerschaltung nach Anspruch 8, ein Bremssystem nach Anspruch 9 sowie eine Verwendung nach Anspruch 10.

EP 2433830 A1 zeigt ein Verfahren für Elektrofahrzeuge, insbesondere für den Abschleppbetrieb von Elektrofahrzeugen. Ziel ist es, eine Bereitstellung von Energie abgeschleppter Elektrofahrzeuge zur ermöglichen.

DE 10159639 A1 zeigt ein Verfahren zur Aufrechterhaltung der Versorgungsspannung einer Stromrichterelektronik während eines Stillsetzvorganges einer stromrichtergespeisten Drehfeldmaschine mittels eines stromrichtergesteuerten Ankerkurzschlusses.

DE 102012216008 A1 zeigt ein Verfahren zum Einstellen von Betriebszuständen eines Wechselrichters.

Im Stand der Technik sind Bremsanlagen bekannt, die im By-Wire-Betrieb betrieben werden können. In diesen Fällen erfolgt der Druckaufbau mittels eines Linearaktuators (Motors).

Für die Ansteuerung des Motors werden Feldeffekttransistoren (FETs) im High-Side- und im Low-Side-Pfad eingesetzt und es sind u.a. drei verschiedene Modi bekannt:
1) Das Öffnen aller FETs,
2) der Kurzschluss aller Low-Side-FETs, sowie
3) ein Wechsel zwischen einem Öffnen und einem Kurzschluss aller FETs .

Erfolgt während des Druckaufbaus ein Starten des Verbrennungsmotors, kann eine extreme Unterspannung entstehen, die unterhalb von 6,2V zu einer sofortigen Abschaltung der BLDC Motoransteuerung führt. Die sofortige Abschaltung des Motors ist notwendig, um Schäden an einer Endstufe und Fehlererkennungen einer Gate Driver Unit (Hardwarebaustein vor der Leistungsendstufe des Motors, der grundlegende elektrische Fehler vermeidet und überwacht) zu vermeiden, welche ansonsten eine dauerhafte Abschaltung des Systems bewirken würden. Dies ist aus mechanischen Gründen wünschenswert, da ein druckbelasteter Linearaktuator durch den vorhandenen Hydraulikdruck nach hinten in den mechanischen Endanschlag gedrückt wird, so dass dort die mechanische Rutschkupplung beschädigt werden könnte.

Bezüglich der Ansteuerschaltung des Motors bedeutet dies, dass wenn der Motor in einem Normalbetrieb angesteuert wird und ein hydraulischer Druck im System besteht, ein derartiger Stromverbrauch vorhanden ist, dass die Kapazität des Zwischenkreises in der Ansteuerschaltung schnell entladen wird.

Der Nachteil im Stand der Technik ist zusammenfassend, dass
- ein Zurückdrücken des Linearaktuators durch den hydraulischen Druck auftreten kann, was einen starken Druckverlust verursacht,
- eine Beschädigung der Rutschkupplung durch eine zu hohe Motordrehzahl beim Erreichen des Endanschlags auftreten kann und
- eine zu niedrige Zwischenkreisspannung auftreten kann, die zum Verlust der Kontrolle über die GDU und den Motor führt.

Es ist daher Aufgabe der Erfindung, ein verbessertes Verfahren zur Ansteuerung sowie eine zugehörige verbesserte Ansteuerschaltung bereitzustellen.

Die Aufgabe wird gelöst durch die unabhängigen Ansprüche.

Die Erfindung betrifft ein Verfahren zur Ansteuerung eines mehrphasigen Motors mittels einer Ansteuerschaltung. Die Ansteuerschaltung weist mehrere Transistoren auf und für jede Phase des Motors sind ein erster Pfad und ein zweiter Pfad vorgesehen, wobei dem ersten und dem zweiten Pfad der verschiedenen Phasen jeweils mindestens ein Transistor zugeordnet ist. Es sind zur Ansteuerung des Motors ein Normalmodus, ein erster Ansteuermodus und ein dritter Ansteuermodus vorgesehen, wobei für den ersten Ansteuermodus alle Transistoren der zweiten Pfade kurzgeschlossen werden und für den dritten Ansteuermodus alle Transistoren geöffnet werden. Zudem ist gemäß der Erfindung ein zweiter Ansteuermodus vorgesehen, bei dem ein Wechselbetrieb zwischen dem ersten Ansteuermodus und dem dritten Ansteuermodus stattfindet. Folgende Schritte werden durchgeführt:
- Feststellen einer Unterspannung oder einer Überspannung in der Ansteuerschaltung,
- Betreiben der Ansteuerschaltung im ersten Ansteuermodus, wenn eine erste Unterspannung detektiert wurde und
- Betreiben der Ansteuerschaltung im zweiten Ansteuermodus, wenn eine zweite Unterspannung detektiert wurde.

Gemäß der Erfindung werden somit die verschiedenen Modi (erster Ansteuermodus und zweiter Ansteuermodus) bei Erreichen unterschiedlicher Unterspannungswerte eingesetzt. Damit ist es möglich, ein ungewolltes Zurückdrücken des Linearaktuators zu vermeiden und gleichzeitig die elektrischen Komponenten des Motors vor Zerstörung zu schützen. Ebenfalls wird die Zwischenkreisspannung erhöht, so dass eine korrekte Ansteuerung der FETs durch die Gate Driver Unit möglich ist. So wird eine Beschädigung der Rutschkupplung sowie der elektrischen Komponenten des Motors vermieden. Die Transistoren sind bevorzugt als Feldeffekttransistoren (FETs) ausgebildet.

In einer bevorzugten Weiterbildung der Erfindung wird die Ansteuerschaltung im dritten Ansteuermodus betrieben, wenn eine dritte Unterspannung detektiert wurde. Bei dieser dritten Unterspannung handelt es sich bevorzugt um einen internen elektrischen Fehlerfall, in dem nur eine interne Unterspannung, keine externe Unterspannung, auftritt. Bei diesem Fehlerfall werden alle Bremsfunktionen abgeschaltet und es wird auf die hydraulische Rückfallebene zurückgegriffen.

In einer bevorzugten Weiterbildung der Erfindung wird die Ansteuerschaltung im ersten Ansteuermodus betrieben, wenn eine Überspannung detektiert wurde. Bevorzugt wird in diesem Fall die überschüssige Energie über den ohmschen Widerstand der Spulen des Motors vernichtet. Vorteilhaft ist es so möglich, diese Energie abzubauen, ohne, dass eine Zehnerdiode benötigt wird. In dem ersten Ansteuermodus wird der Druck im System im Wesentlichen gehalten.

In einer bevorzugten Weiterbildung der Erfindung ist zum Detektieren der ersten oder der zweiten Unterspannung mindestens ein erster und/oder ein zweiter Schwellenwert vorgesehen. Dabei wird die erste Unterspannung festgestellt, wenn eine Zwischenkreisspannung zwischen dem ersten Schwellenwert und dem zweiten Schwellenwert detektiert wird.

In einer bevorzugten Weiterbildung der Erfindung wird die zweite Unterspannung festgestellt, wenn eine Zwischenkreisspannung unterhalb des zweiten Schwellenwerts detektiert wird. Besonders bevorzugt ist der zweite Schwellenwert niedriger als der erste Schwellenwert definiert.

Beispielsweise wird der erste Schwellenwert auf eine Spannung von 6.2V festgelegt und der zweite Schwellenwert auf eine Spannung von 5.8V. Dies sind allerdings nur Beispielswerte; die Schwellenwerte können beliebig anders definiert sein. Sinkt die Zwischenkreisspannung an einer bestimmten Kapazität der Ansteuerschaltung (an der sog. Klemme KL30_M) auf unterhalb des ersten Schwellenwerts ab, so wird die erste Unterspannung detektiert und der erste Ansteuermodus aktiviert. Es werden dafür alle Transistoren der zweiten Pfade kurzgeschlossen. Dadurch sinkt die Zwischenkreisspannung nur noch sehr langsam weiter ab. Gelangt die Zwischenkreisspannung in einen Bereich unterhalb des zweiten Schwellenwerts, so wird eine zweite Unterspannung detektiert und es wird in den zweiten Modus geschaltet. Dabei werden wechselweise alle FETs geöffnet und alle FETs der zweiten Pfade kurzgeschlossen (TOGGLE-Modus) . Dies führt dazu, dass eine Rückspeisung von Energie stattfindet, welche die Zwischenkreisspannung in der Kapazität ansteigen lässt.

In einer bevorzugten Weiterbildung wird die Ansteuerschaltung im Normalmodus betrieben, sobald eine Zwischenkreisspannung in der Kapazität oberhalb des ersten Schwellenwerts und unterhalb eines dritten Schwellenwerts detektiert wird. Der Normalmodus ist bevorzugt der Modus, in dem keine besonderen Einstellungen vorgenommen werden und der Modus, in dem das System fehlerfrei läuft. Der dritte Schwellenwert definiert bevorzugt die Grenze zur Überspannung.

Der Betrieb im TOGGLE-Modus bzw. zweiten Ansteuermodus kann dazu führen, dass die Zwischenkreisspannung bei der Rückspeisung von Energie so weit ansteigt, dass sie über dem ersten Schwellenwert liegt. In diesem Fall kann im Normalmodus (Normalbetrieb) fortgefahren werden.

In allen beschriebenen Ansteuermodi (außer dem Normalbetrieb) wird zudem die Motorkontrolle vom EES (Electric Energy Supply) übernommen.

Die Erfindung betrifft weiterhin eine Ansteuerschaltung zur Ansteuerung des mehrphasigen Motors, wobei die Ansteuerschaltung geeignet ist, das beschriebene Verfahren durchzuführen. Ferner betrifft die Erfindung ein Bremssystem mit dieser Ansteuerschaltung und eine Verwendung dieser Ansteuerschaltung in einem Bremssystem. Insbesondere bevorzugt ist das Bremssystem in einem Kraftfahrzeug angeordnet.

Weitere bevorzugte Ausführungsformen ergeben sich auch aus den Unteransprüchen und der nachfolgenden Beschreibung von Ausführungsbeispielen anhand von Figuren.

In schematischer Darstellung zeigen beispielhaft:
- Fig. 1: einen Überblick über die Zuordnung von Unterspannungen und Überspannung zu den jeweiligen Ansteuermodi,
- Fig. 2: ein Ablaufdiagramm zu den Fällen, in denen eine erste oder eine zweite Unterspannung vorliegt.

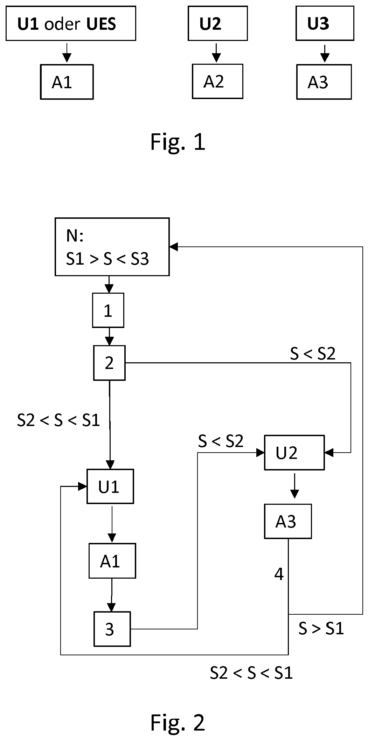

Fig. 1 zeigt die Zuordnung von Unterspannungen und Überspannung zu den jeweiligen Ansteuermodi. Die erste Unterspannung ist mit U1, die zweite Unterspannung mit U2 und die dritte Unterspannung mit U3 gekennzeichnet. Die Überspannung trägt das Bezugszeichen UES. Wird eine erste Unterspannung U1 oder eine Überspannung UES detektiert, so wird der erste Ansteuermodus A1 aktiviert. Wird eine zweite Unterspannung U2 detektiert, so wird der zweite Ansteuermodus A2 aktiviert. Beim Detektieren einer dritten Unterspannung U3 ist die Aktivierung des dritten Ansteuermodus A3 vorgesehen. Die zweite Unterspannung U2 wird erkannt, wenn die Zwischenkreisspannung auf einen Wert unterhalb eines zweiten Schwellenwerts absinkt. Die erste Unterspannung U1 wird erkannt, wenn die Zwischenkreisspannung S in den Bereich zwischen einem ersten Schwellenwert und dem zweiten Schwellenwert fällt. Eine Überspannung UES wird erkannt, wenn die Zwischenkreisspannung auf einen Wert oberhalb eines dritten Schwellenwerts gelangt. Die dritte Unterspannung U3 stellt einen Sonderfall dar, bei dem ein Fehler durch eine interne Unterspannung vorliegt.

In der zugehörigen Ansteuerschaltung für den mehrphasigen Motor sind mehrere Transistoren vorgesehen, wobei für jede Phase des Motors ein erster Pfad und ein zweiter Pfad vorgesehen sind. Dem ersten und im zweiten Pfad der verschiedenen Phasen sind jeweils mindestens ein Transistor zugeordnet. Bevorzugt ist der Motor als dreiphasiger Motor ausgebildet. Der erste Pfad der Ansteuerschaltung ist dabei als High-Side-Pfad und der zweite Pfad als Low-Side Pfad ausgebildet, wobei sowohl der High-Side-Pfad als auch der Low-Side-Pfad für jede Phase des Motors einen Transistor aufweisen. Somit weisen sowohl der High-Side-Pfad als auch der Low-Side-Pfad bevorzugt jeweils drei Transistoren auf. Bevorzugt sind die Transistoren als Feldeffekttransistoren (FETs) ausgebildet.

Im ersten Ansteuermodus A1 werden alle drei Transistoren des Low-Side-Pfads kurzgeschlossen (SHORT-Modus). Dadurch wird der Druck im System gehalten und die Zwischenkreisspannung sinkt langsam weiter ab.

Im dritten Ansteuermodus A3 werden alle Transistoren (sowohl des High-Side-Pfads als auch des Low-Side-Pfads) geöffnet (OPEN-Modus).

Im zweiten Ansteuermodus A2 wird ein Wechselbetrieb zwischen dem ersten Ansteuermodus A1 und dem dritten Ansteuermodus A3 durchgeführt (TOGGLE-Modus).

Fig. 2 zeigt ein Ablaufdiagramm zu den Fällen, in denen eine erste Unterspannung U1 oder eine zweite Unterspannung U2 vorliegt.

Im Normalmodus N liegt die Zwischenkreisspannung S der Kapazität der Ansteuerschaltung zwischen dem ersten Schwellenwert S1 und dem dritten Schwellenwert S3. Entsteht nun ein hoher Druck im System (Bezugsziffer 1), so führt dies zu einem hohen Stromverbrauch, so dass die Kapazität in der Ansteuerschaltung relativ schnell entladen wird (Bezugsziffer 2). Dadurch sinkt die Zwischenkreisspannung S.

Als Folgeschritte werden zwei Fälle unterschieden, nämlich ein Absinken der Zwischenkreisspannung S unter den ersten Schwellenwert S1 oder ein Absinken der Zwischenkreisspannung S unter den zweiten Schwellenwert S2. Dabei ist der zweite Schwellenwert S2 niedriger als der erste Schwellenwert S1 definiert. Beispielsweise liegt der erste Schwellenwert bei 6.2V und der zweite Schwellenwert bei 5.8V. Der dritte Schwellenwert kann beispielsweise bei 38V definiert sein.

Die Zwischenkreisspannung liegt im ersten Fall dann zwischen dem ersten Schwellenwert S1 und dem zweiten Schwellenwert S2, also bevorzugt zwischen 5.8V und 6.2V. Hier ist somit die Unterspannung U1 aufgetreten. Bevorzugt wird - nachdem die Unterspannung U1 detektiert wurde - eine entsprechende Fehlermeldung generiert. In jedem Fall wird aber der erste Ansteuermodus A1 (SHORT-Modus) aktiviert, bei welchem die Transistoren des Low-Side-Pfads kurzgeschlossen werden. Dies hat zur Folge, dass die Kapazität in der Ansteuerschaltung nur noch mit dem Eigenstromverbrauch der Gate Driver Unit belastet wird. Dadurch sinkt die Zwischenkreisspannung S sehr langsam weiter ab (Bezugsziffer 3).

Ist die Zwischenkreisspannung S so weit abgesunken, dass sie den zweiten Schwellenwert S2 unterschreitet, wird die zweite Unterspannung U2 festgestellt und bevorzugt eine entsprechende Fehlermeldung generiert. In jedem Fall wird dann jedoch in den dritten Ansteuermodus A3 (TOGGLE-Modus) umgeschaltet. Dafür wird zwischen dem ersten Ansteuermodus A1 und dem zweiten Ansteuermodus A2 hin- und hergeschaltet. Dies bewirkt, dass eine Rückspeisung von Energie in die Kapazität stattfindet und die Zwischenkreisspannung S ansteigt (Bezugsziffer 4). Der dritte Ansteuermodus A3 wird aufrechterhalten, bis die Zwischenkreisspannung S sich oberhalb des zweiten Schwellenwerts S2 oder sogar oberhalb des ersten Schwellenwerts S1 befindet.

Im Fall, dass sich die Zwischenkreisspannung S oberhalb des zweiten Schwellenwerts S2 und unterhalb des ersten Schwellenwerts S1 befindet, wird von neuem eine Unterspannung U1 detektiert und die entsprechenden Verfahrensschritte durchgeführt. Im Fall, dass sich die Zwischenkreisspannung S oberhalb des ersten Schwellenwerts S1 und unterhalb des dritten Schwellenwerts befindet, wird der Normalmodus N aktiviert.

Aus dem Normalmodus N ist es möglich, dass die Zwischenkreisspannung S auch direkt auf einen Wert unterhalb des Schwellenwerts S2 abfällt. Dann wird direkt eine Unterspannung U2 festgestellt und nach den bereits beschriebenen Verfahrensschritten gehandelt.

Praktischerweise wird die Zwischenkreisspannung S gemessen und dann mit den Schwellenwerten S1, S2, S3 verglichen, um eine Unterspannung U1, U2, U3 oder eine Überspannung UES erkennen zu können.

Weitere Informationen zu der Erfindung werden folgend aufgeführt:
Im Gegensatz zu bisherigen Verfahren wird der Motor bei der Unterspannungsabschaltung nicht einfach hochohmig geschaltet oder kurzgeschlossen, sondern in einen generatorischen Betrieb versetzt, so dass durch das Zurückdrücken des Linearaktuators durch den vorhandenen Hydraulikdruck eine ausreichende Generatorspannung am Motor generiert wird. Dadurch wird eine ausreichende Versorgung der GDU gewährleistet, so dass die Brücke aus den Transistoren (B6-Brücke) nicht beschädigt werden kann. Dies wird erreicht, indem die Brücke den Motor an allen Polen kurzschließt, so dass durch die Motorrotation ein Strom in den Wicklungen fließen kann. Dieser Strom bremst den Motor ab. Im nächsten Schritt wird die Brücke abgeschaltet. Dies führt zu einer hohen Zwischenkreisspannung, die über die intrinsischen Dioden der FETs zu einer Rückspeisung in den DC-Link Kondensator führt, aus dem auch die GDU versorgt wird. Die Schritte "Kurzschluss" und "Offen" werden so lange wiederholt, bis die DC-Link Spannung wieder über 6.2V steigt.

Sobald die DC-Link Spannung die existierende Unterspannungsschwelle überschritten hat, wird die Kontrolle an die Feldregelung zurückgegeben, um möglichst schnell eine effiziente Motoransteuerung und die Regelung des Drucks zu ermöglichen. Falls die Feldregelung zu viel Strom verbraucht, kann die Zwischenkreisspannung wieder unter die Unterspannungsschwelle sinken und der Vorgang wiederholt sich.

Es erfolgt also eine intermittierende schnelle Ab- und Wiederanschaltung der Motoreinheit, die jedoch von ihrem Verhalten zu einem zuverlässigen Bremsbetrieb führt, so dass der Motor nicht mehr mit hoher Geschwindigkeit in den Endanschlag fährt.

Eine Beschädigung der Rutschkupplung sowie der elektrischen Komponenten des Motors werden daher vermieden.

## Patentansprüche

1. Verfahren zur Ansteuerung eines mehrphasigen Motors als Teil eines Linearaktuators in einem Bremssystem mittels einer Ansteuerschaltung, wobei die Ansteuerschaltung mehrere Transistoren aufweist und wobei für jede Phase des Motors ein erster Pfad und ein zweiter Pfad vorgesehen sind, wobei dem ersten und dem zweiten Pfad der verschiedenen Phasen jeweils mindestens ein Transistor zugeordnet ist, und wobei ein Normalmodus (N), ein erster Ansteuermodus (A1) und ein dritter Ansteuermodus (A3) vorgesehen sind, wobei für den ersten Ansteuermodus (A1) alle Transistoren der zweiten Pfade kurzgeschlossen werden und für den dritten Ansteuermodus (A3) alle Transistoren geöffnet werden, **dadurch gekennzeichnet, dass** ein zweiter Ansteuermodus (A2) vorgesehen ist, bei dem ein Wechselbetrieb zwischen dem ersten Ansteuermodus (A1) und dem dritten Ansteuermodus (A3) stattfindet, wobei folgende Schritte durchgeführt werden:
- Detektieren einer Unterspannung (U1, U2, U3) oder einer Überspannung (UES) in der Ansteuerschaltung,
- Betreiben der Ansteuerschaltung im ersten Ansteuermodus (A1), wenn eine erste Unterspannung (U1) detektiert wurde,
- Betreiben der Ansteuerschaltung im zweiten Ansteuermodus (A2), wenn eine zweite Unterspannung (U2) detektiert wurde.

2. Verfahren nach Anspruch 1, **dadurch gekennzeichnet, dass** folgender Schritt durchgeführt wird:
- Betreiben der Ansteuerschaltung im dritten Ansteuermodus (A3), wenn eine dritte Unterspannung (U3) detektiert wurde.

3. Verfahren nach Anspruch 1 oder 2, **dadurch gekennzeichnet, dass** folgender Schritt durchgeführt wird:
- Betreiben der Ansteuerschaltung im ersten Ansteuermodus (A1), wenn eine Überspannung (UES) detektiert wurde.

4. Verfahren nach einem der vorhergehenden Ansprüche, **dadurch gekennzeichnet, dass** zum Detektieren der ersten oder der zweiten Unterspannung (U1, U2) mindestens ein erster und ein zweiter Schwellenwert (S1, S2) vorgesehen sind und folgender Schritt durchgeführt wird:
- Feststellen der ersten Unterspannung (U1), wenn eine Zwischenkreisspannung (S) zwischen dem ersten Schwellenwert (S1) und dem zweiten Schwellenwert (S2) detektiert wird.

5. Verfahren nach einem der vorhergehenden Ansprüche, **dadurch gekennzeichnet, dass** zum Detektieren der ersten oder der zweiten Unterspannung (U1, U2) mindestens ein erster und ein zweiter Schwellenwert (S1, S2) vorgesehen sind und folgender Schritt durchgeführt wird:
- Feststellen der zweiten Unterspannung (U2), wenn eine Zwischenkreisspannung (S) unterhalb des zweiten Schwellenwerts (S2) detektiert wird.

6. Verfahren nach einem der Ansprüche 4 oder 5, **dadurch gekennzeichnet, dass** folgender Schritt durchgeführt wird:
- Betreiben der Ansteuerschaltung im Normalmodus (N), wenn die Zwischenkreisspannung (S) oberhalb des ersten Schwellenwerts (S1) und unterhalb eines dritten Schwellenwerts (S3) detektiert wird.

7. Verfahren nach einem der Ansprüche 4, 5 oder 6, **dadurch gekennzeichnet, dass** der zweite Schwellenwert (S2) niedriger als der erste Schwellenwert (S1) definiert wird.

8. Ansteuerschaltung zur Ansteuerung eines mehrphasigen Motors als Teil eines Linearaktuators für ein Bremssystem, wobei die Ansteuerschaltung eingerichtet ist, das Verfahren nach einem der Ansprüche 1 bis 7 durchzuführen.

9. Bremssystem mit einer Ansteuerschaltung nach Anspruch 8.

10. Verwendung der Ansteuerschaltung nach Anspruch 8 in einem Bremssystem.

## Claims

1. Method for driving a multiphase motor as part of a linear actuator in a brake system by means of a drive circuit, wherein the drive circuit comprises a plurality of transistors, and wherein for each phase of the motor are provided a first path and a second path, wherein at least one transistor is assigned to the first path and to the second path of each of the different phases, and wherein a normal mode (N), a first drive mode (A1) and a third drive mode (A3) are provided, wherein for the first drive mode (A1), all the transistors in the second paths are short-circuited, and for the third drive mode (A3), all the transistors are opened, **characterized in that** a second drive mode (A2) is provided, in which operation alternates between the first drive mode (A1) and the third drive mode (A3), wherein the following steps are performed:
- detecting an undervoltage (U1, U2, U3) or an overvoltage (UES) in the drive circuit,
- operating the drive circuit in the first drive mode (A1) if a first undervoltage (U1) has been detected,
- operating the drive circuit in the second drive mode (A2) if a second undervoltage (U2) has been detected.

2. Method according to Claim 1, **characterized in that** the following step is performed:
- operating the drive circuit in the third drive mode (A3) if a third undervoltage (U3) has been detected.

3. Method according to Claim 1 or Claim 2, **characterized in that** the following step is performed:
- operating the drive circuit in the first drive mode (A1) if an overvoltage (UES) has been detected.

4. Method according to any of the preceding claims, **characterized in that** at least one first and one second threshold value (S1, S2) are provided for detecting the first or the second undervoltage (U1, U2), and the following step is performed:
- ascertaining the first undervoltage (U1) if a DC-link voltage (S) is detected between the first threshold value (S1) and the second threshold value (S2).

5. Method according to any of the preceding claims, **characterized in that** at least one first and one second threshold value (S1, S2) are provided for detecting the first or the second undervoltage (U1, U2), and the following step is performed:
- ascertaining the second undervoltage (U2) if a DC-link voltage (S) is detected below the second threshold value (S2).

6. Method according to either Claim 4 or Claim 5, **characterized in that** the following step is performed:
- operating the drive circuit in normal mode (N) if the DC-link voltage (S) is detected above the first threshold value (S1) and below a third threshold value (S3).

7. Method according to any of Claims 4, 5 or 6, **characterized in that** the second threshold value (S2) is defined to be lower than the first threshold value (S1).

8. Drive circuit for driving a multiphase motor as part of a linear actuator for a brake system, wherein the drive circuit is designed to perform the method according to one of Claims 1 to 7.

9. Brake system comprising a drive circuit according to Claim 8.

10. Use of the drive circuit according to Claim 8 in a brake system.

## Revendications

1. Procédé de commande d'un moteur polyphasé, faisant partie d'un actionneur linéaire dans un système de freinage, au moyen d'un circuit de commande, le circuit de commande comportant une pluralité de transistors et un premier chemin et un deuxième chemin étant prévus pour chaque phase du moteur, au moins un transistor étant associé à chacun des premier et deuxième chemins des différentes phases, et un mode normal (N), un premier mode de commande (A1) et un troisième mode de commande (A3) étant prévus, pour le premier mode de commande (A1) tous les transistors des deuxièmes chemins étant court-circuités et pour le troisième mode de commande (A3) tous les transistors étant ouverts, **caractérisé en ce qu'**un deuxième mode de commande (A2) est prévu dans lequel un fonctionnement alternatif est réalisé entre le premier mode de commande (A1) et le troisième mode de commande (A3), les étapes suivantes étant réalisées :
- détecter une sous-tension (U1, U2, U3) ou une surtension (UES) dans le circuit de commande,
- faire fonctionner le circuit de commande dans le premier mode de commande (A1) lorsqu'une première sous-tension (U1) a été détectée,
- faire fonctionner le circuit de commande dans le deuxième mode de commande (A2) lorsqu'une deuxième sous-tension (U2) a été détectée.

2. Procédé selon la revendication 1, **caractérisé en ce que** l'étape suivante est réalisée :
- faire fonctionner le circuit de commande dans le troisième mode de commande (A3) lorsqu'une troisième sous-tension (U3) a été détectée.

3. Procédé selon la revendication 1 ou 2, **caractérisé en ce que** l'étape suivante est réalisée :
- faire fonctionner le circuit de commande dans le premier mode de commande (A1) lorsqu'une surtension (UES) a été détectée.

4. Procédé selon l'une des revendications précédentes, **caractérisé en ce qu'**au moins une première et une deuxième valeur de seuil (S1, S2) sont prévues pour détecter la première ou la deuxième sous-tension (U1, U2) et l'étape suivante est réalisée :
- déterminer la première sous-tension (U1) lorsqu'une tension de circuit intermédiaire (S) est détectée entre la première valeur de seuil (S1) et la deuxième valeur de seuil (S2).

5. Procédé selon l'une des revendications précédentes, **caractérisé en ce qu'**au moins une première et une deuxième valeur de seuil (S1, S2) sont prévues pour détecter la première ou la deuxième sous-tension (U1, U2) et l'étape suivante est réalisée :
- déterminer la deuxième sous-tension (U2) lorsqu'une tension de circuit intermédiaire (S) inférieure à la deuxième valeur de seuil (S2) est détectée.

6. Procédé selon l'une des revendications 4 et 5, **caractérisé en ce que** l'étape suivante est réalisée :
- faire fonctionner le circuit de commande en mode normal (N) lorsque la tension de circuit intermédiaire (S) supérieure à la première valeur de seuil (S1) est inférieure à une troisième valeur de seuil (S3) est détectée.

7. Procédé selon l'une des revendications 4, 5 et 6, **caractérisé en ce que** la deuxième valeur de seuil (S2) est définie comme étant inférieure à la première valeur de seuil (S1).

8. Circuit de commande destiné à commander un moteur polyphasé faisant partie d'un actionneur linéaire d'un système de freinage, le circuit de commande étant conçu pour mettre en oeuvre le procédé selon l'une des revendications 1 à 7.

9. Système de freinage comprenant un circuit de commande selon la revendication 8.

10. Utilisation du circuit de commande selon la revendication 8 dans un système de freinage.
